# EUROPÄISCHE PATENTANMELDUNG

(11) **EP 1 184 800 A1**
(43) Veröffentlichungstag der Anmeldung: **06.03.2002**
(21) Anmeldenummer: 00120302.5
(22) Anmeldetag: 15.09.2000
(51) Int. Cl.: G06F 17/60

(54) **Brainstorming-Plattform**

(30) Priorität: 04.09.2000 EP 00119125
(71) Anmelder: Müller, Michael A., 10627 Berlin (DE)
(72) Erfinder: Müller, Michael A., 10627 Berlin (DE)
(74) Vertreter: Rupp, Christian, Dipl.Phys.

(57) **Zusammenfassung**

Zur interaktiven Problemlösung für das Internet (28) werden durch Problemsteller (1) Problemstellungen (5) in das Internet (28) zu einer zentralen Problemlösungs-Plattform (2) eingegeben. Weitere Teilnehmern, sog. Ideengeber (3) können Lösungsvorschläge (4) eingeben. Dem Problemsteller (1) bzw. einem Systemmoderator (8) stehen dabei Steuertools (6) zur Verfügung, die eine gezielte individuelle Vergabe von Motivationspunkten bzw. Prämierungen der Ideengeber (3) ermöglichen. Zum Lenken der Entwicklung der Problemlösung kann die Vergabe von Motivationspunkten (13) bzw. die Prämierung (12) im Zuge der Entwicklung der Lösungsvorschläge (4) durch den Problemsteller (1) bezüglich der Vergabe an die weiteren Ideengeber (3) variiert werden.

Dabei gibt es mehrere Ebenen, nämlich eine öffentliche Problemchat-artige Ebene, eine professionelle Ebene, bei der Unternehmen (21) sie betreffende Probleme durch ausgewählte Kompetenzträger (22) lösen können sowie eine firmeninterne Intranet-Ebene, die durch Unternehmen im Sinne des kontinuierlichen Verbesserungsprozesses bzw. gemäß den betrieblichen Vorschlagswesen genutzt werden kann.

## Beschreibung

Die vorliegende Erfindung bezieht sich auf Verfahren zur interaktiven Problemlösung über ein Datennetz, auf ein Software-Programm zur Ausführung solcher Verfahren sowie auf einen Webserver, der ein solches Software-Programm aufweist. Weiterhin bezieht sich die vorliegende Erfindung auf eine Problemlösung-Datenbank, die mittels solcher genannter Verfahren aufgebaut wird.

Die zentrale Idee des Internets, nämlich dezentral angeordnete Teilnehmer miteinander zu verbinden, bietet sich für den Bereich Brainstorming/Problemlösung an. Dementsprechend ist es auch aus dem Stand der Technik bereits bekannt, eine Plattform bereitzustellen, mittels der Problemsteller Fragen oder Probleme und Ideengeber Beiträge oder Lösungsvorschläge eingeben können. Unter Plattform in diesem Sinne wird also ein auf einen zentralen Rechner eines Datennetzes, bspw. des Internets, implementiertes Kommunikations- und Visualisierungsprogramm verstanden, auf das beliebige oder ausgewählte Teilnehmer der Kommunikation über das Datennetz kommunizieren können.

Aus dem Stand der Technik ist es genauer gesagt bekannt, daß ein Problemsteller eine Frage in die Plattform eingibt. Dies bedeutet, dass er sich an der Plattform registriert und dann sein Problem in Textform in ein sogenanntes Forum eingibt. Er muß dann hoffen, daß sich kompetente Ideengeber bzw. überhaupt motivierte Ideengeber finden, die zutreffende Lösungsvorschläge oder Antworten eingeben. Im Idealfall kann somit zur Lösung von Problemen auf das dezentral mittels der potentiellen Teilnehmer organisierte weltweite Wissen zurückgegriffen werden.

Indessen hat sich herausgestellt, daß insbesondere kompetente Ideengeber nicht ohne weiteres ihre Beiträge zu den vom Problemsteller gestellten Fragen geben. Aus dem Stand der Technik ist es daher bekannt, dass der Problemsteller aus Motivationsgründen eine feste Prämie als Anreiz auslobt. Der Problemsteller verspricht also dem Ideengeber, der die komplette Lösung findet, einen festen Geldbetrag.

Daraus ergibt sich das Problem, daß der Geldbetrag ggf. nie ausgezahlt wird, da nach Einschätzung des Problemstellers keiner der Ideengeber eine vollständige bzw. ausreichend kompetente Antwort gegeben hat. Darüber hinaus eignet sich eine solche Auslobung einer einheitlichen Prämie nur für Problemstellungen, die tatsächlich in einem Zug gelöst werden können. Der Problemsteller steht sonst vor dem Dilemma, entweder den vollständigen Betrag an eine nicht zufriedenstellende Antwort zu vergeben oder aber die Prämie für einen Fall gar nicht zu vergeben und somit sämtliche potentiellen Teilnehmer zu demotivieren.

Das Motivationsproblem für iterative Lösungsprozesse, bei dem also eine vollständige bzw. kompetente Lösung in mehreren Schritten oder ggf. mit mehreren Verästelungen erarbeitet wird, besteht also beim Stand der Technik weiter. Dabei ist zu bedenken, daß dieser iterative Lösungsprozeß der Realität bei Brainstorming-artigen Veranstaltungen wesentlich näher kommt.

Es ist daher Aufgabe der vorliegenden Erfindung, eine Technik bereit zu stellen, die eine Problemlösung über ein Datennetz ermöglicht, wobei diese Technik darauf ausgelegt sein soll, den natürlichen iterativen Lösungsprozeß in mehreren Schritten durch entsprechende Motivation von Ideengebern zu unterstützen.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Erfindungsgemäß ist ein Verfahren zur interaktiven Problemlösung über ein Datennetz, insbesondere das Internet, vorgesehen. Dabei gibt ein erster Teilnehmer (Problemsteller) eine Problemstellung in das Datennetz ein. Weitere Teilnehmer, deren Anzahl vorgegeben oder aber auch unbegrenzt ist, geben Lösungsvorschläge ein. Zur Unterstützung des natürlichen iterativen Lösungsprozesses durch entsprechende Motivation stehen dem ersten Teilnehmer, dem Problemsteller, Steuertools zur Verfügung. Der Begriff "Tool" in diesem Sinne bezeichnet beispielsweise auf der zentralen Problemlösungs-Plattform abgelegte abgeschlossene Programmeinheiten, die jeweils eine vorbestimmte Funktion ausführen. Der erste Teilnehmer, der Problemsteller, kann sich dieser Steuertools bedienen, um eine gezielte individuelle Vergabe von Motivationspunkten bzw. eine gezielte individuelle Prämierung der weiteren Teilnehmer durchzuführen. Die Vergabe von Motivationspunkten bzw. die Prämierung kann dabei im Zuge der Entwicklung der Lösungsvorschläge durch den Problemsteller, dem ersten Teilnehmer bezüglich der weiteren Teilnehmer zum Lenken der Entwicklung der Problemlösung variiert werden.

Die vorliegende Erfindung löst sich somit von dem Prinzip der festen Vergabe der gesamten Prämiensumme und erlaubt vielmehr eine gezielte abschnittweise Vergabe, um das Motivationspotential während dem gesamten ggf. iterativen Problemlösungsprozess hochzuhalten

Der erste Teilnehmer kann vorab eine feste Prämie festlegen, die im Zuge der Problemlösung hinsichtlich Vergabezeitpunkt und Addressat flexibel aufgeteilt wird, aber auf jeden Fall ausgezahlt werden muß.

Darüber hinaus können sich die weiteren Teilnehmer, also die Ideengeber, untereinander einen Teil der Prämierung zuweisen.

Wie gesagt, kann sowohl die Eingabe der Problemstellung wie auch der Lösungsvorschläge einschließlich der Bereitstellung der Steuertools über eine zentrale Datennetz-Plattform erfolgen, die auf einem Server des Datennetzes (Internets) abgelegt ist.

Die Lösungsvorschläge können in Echtzeit eingegeben und auf der Datennetz-Plattform angezeigt werden. Die Eingabe der Problemstellung und der Lösungsvorschläge kann dabei anonym erfolgen.

Die Steuertools können dabei eine Funktion zur Vergabe eines Teilbetrags der Prämie an einen weiteren Teilnehmer aufweisen. Weiterhin können die Steuertools eine Funktion zur Lenkung der Problemlösung entsprechend einem ausgewählten Lösungsvorschlag aufweisen, wobei sich also die weitere Problemlösung nur im Sinne dieses ausgewählten Lösungsvorschlags weiter entwickeln kann.

Gemäß einem weiteren Steuertool ist eine Funktion zur Sperrung der Weiterentwicklung eines Lösungsvorschlages auch vorgesehen, so daß die weitere Entwicklung der Problemlösung zumindest zeitweise nicht mehr im Sinne des gesperrten Lösungsvorschlags erfolgen kann.

Gemäß einem weiteren Aspekt der Erfindung ist ein Softwareprogramm vorgesehen, das in einem in einen Speicher eines Rechners eines Datennetzes geladenen oder implementierten Zustand angeschlossenen Teilnehmern des Datennetzes die Ausführung eines Verfahrens wie oben ausgeführt ermöglicht.

Weiterhin ist ein WebServer mit einem solchen Softwareprogramm vorgesehen.

Gemäß einem weiteren Aspekt der Erfindung ist ein System zur interaktiven Problemlösung über ein Datennetz vorgesehen, bei dem ein erster Teilnehmer eine Fragen- oder Problemstellung in das Datennetz eingibt. Weitere Teilnehmer geben Antworten oder Lösungsvorschläge ein, wobei einem Moderator Steuertools zur Verfügung stehen, die eine gezielte individuelle Vergabe von Motivationspunkten bzw. einer Prämierung der weiteren Teilnehmer ermöglichen. Dabei kann die Vergabe von Motivationspunkten bzw. Prämierungen im Zuge der Entwicklung der Lösungsvorschläge bzw. Antworten durch den Moderator bzw. der weiteren Teilnehmer zum Lenken der Entwicklung der Problemlösung variiert werden.

Der Moderator kann durch den ersten Teilnehmer und/oder die weiteren Teilnehmer gewählt werden. Ggf. kann nur der Moderator kann vorab eine feste Prämie festlegen, die im Zuge der Problemlösung flexibel aufgeteilt wird.

Die Zahl der weitere Teilnehmer kann beschränkt sein, was beispielsweise dann der Fall ist, wenn das Datennetz ein firmeninternes Intranet ist. Die Eingabe der Problemlösung und der Lösungsvorschläge sowie die Bereitstellung der Steuertools kann über eine zentrale Datennetz-Plattform erfolgen.

Gemäß einem weiteren Aspekt ist ein Softwareprogramm zum Ausführen eines solchen Verfahrens vorgesehen. Gemäß einem noch weiteren Aspekt ist die Verwendung eines solchen Verfahrens in einem kontinuierlichen Verbesserungsprozeß eines Unternehmens vorgesehen.

Gemäß einem noch weiteren Aspekt der vorliegenden Erfindung ist ein Verfahren zur interaktiven Problemlösung über ein Datennetz vorgesehen, wobei die Problemstellung durch einen Auftraggeber und die Problemlösung durch Kompetenzträger erfolgt. In einem ersten Schritt wird dabei öffentlich über das Datennetz ein kompetenter Kompetenzträger aus mehreren anonymen Kompetenzträgern auf Grundlage von Vorab-Lösungsvorschlägen, die die Kompetenzträger über das Datennetz abgeben, ausgewählt. Die abschließende Lösung der Problemstellung erfolgt dann in einer nicht öffentlichen Kooperation zwischen einem identifizierten ausgewählten Kompetenzträger und dem Auftraggeber.

Die Auswahl der Kompetenzträger kann dabei über die zentrale Datennetz-Plattform erfolgen. Die Kompetenzträger können voraus gewählt sein.

Gemäß einem noch weiteren Aspekt der vorliegenden Erfindung ist ein Verfahren der interaktiven Problemlösung über ein Datennetz vorgesehen, bei dem ein erster Teilnehmer eine Frage- oder Problemstellung in das Datennetz, beispielsweise zu einer zentralen Problemlösungs-Plattform eingibt. Weitere Teilnehmer geben Antworten oder Lösungsvorschläge ein, wobei die Problembeschreibung online mittels einer graphischen Darstellung auf einer Datennetz-Plattform auf einem zentralen Rechner des Datennetzes erfolgt. Die graphische Darstellung der Problembeschreibung kann idealerweise von sämtlichen weiteren Teilnehmern online eingesehen werden. Als einfachere Lösung kann vorgesehen werden, dass der Teilnehmer mit der zuletzt aktualisierten Fassung der graphischen Darstellung arbeitet, die erst auf Betätigung einer bestimmten Schaltfläche hin zu der zentralen Plattform hin übertragen wird.

Die graphische Darstellung kann dabei ohne aktiven oder passiven Herunterlade-Vorgang unmittelbar auf dem zentralen Rechner erfolgen.

Gemäß einem noch weiteren Aspekt der vorliegenden Erfindung ist eine Problemlösung-Datenbank vorgesehen, die Ideen, Problemstellungen und Lösungsvorschläge enthält, die gemäß einem der oben genannten Verfahren - oder soweit es sich um nicht durch Problemstellungen forcierte Ideen handelt, diret über eine Eingabemaske der Problemlösungsdatenbank- in eine zentrale Datennetz-Plattform eingegeben wurden. Dabei können die Lösungsvorschläge in der Datenbank hinsichtlich ihrer Qualität bewertet sein.

Diese Qualitätsbewertung kann beispielsweise auf Grundlage der vergebenen Motivationspunkte bzw. Prämierungen für die entsprechende Lösungsvorschläge erfolgen.

Unter Bezugnahme auf die Figuren der begleitenden Zeichnungen werden nunmehr Ausführungsbeispiele der vorliegenden Erfindung näher erläutert, so daß weitere Merkmale, Vorteile und Eigenschaften für den Durchschnittsfachmann deutlich werden.
- Fig. 1: zeigt eine schematische Ansicht eines Datennetz-Systems zur Ausführung der vorliegenden Erfindung ,
- Fig. 2: zeigt eine schematische Ansicht einer Technik zur interaktiven Problemlösung gemäß der vorliegenden Erfindung,
- Fig. 3: zeigt ein weiteres Tool der Technologie gemäß Fig. 2,
- Fig. 4: zeigt eine schematische Ansicht des Ablaufs gemäß einem weiteren Aspekt der vorliegenden Erfindung,
- Fig. 5: zeigt eine detaillierte Ansicht des Ablaufs von Fig. 4,
- Fig. 6: zeigt weitere Schritte, die auf den letzten Schritt von Fig. 5 folgen können,
- Fig. 7: zeigt eine schematische Ansicht eines Detailablaufs von Fig. 6,
- Fig. 8: zeigt im Detail das Modell A von Fig. 7,
- Fig. 9: zeigt im Detail das Modell B von Fig. 7,
- Fig. 10: zeigt ein weiteres Ausführungsbeispiel der vorliegenden Erfindung, bei dem eine interaktive Problemlösung in einem Intranet eines Unternehmens stattfindet,
- Fig. 11: zeigt die Funktion eines System Moderators in dem System von Fig. 10,
- Fig. 12: zeigt weitere Abläufe, die im Zusammenhang mit dem System von Fig. 11 erfolgen können,
- Fig. 13: zeigt die Anwendung der vorliegenden Erfindung auf ein TV-Format, nämlich eine interaktive Quizshow,
- Fig. 14: zeigt eine Detailansicht zu dem TV-Format gemäß Fig. 13,
- Fig. 15: zeigt ein weiteres Beispiel für die Anwendung der vorliegenden Erfindung auf TV-Format, und
- Fig. 16: zeigt ein noch weiteres Beispiel für die Anwendung der vorliegenden Erfindung auf ein TV-Format, nämlich auf ein Jugend-Format.

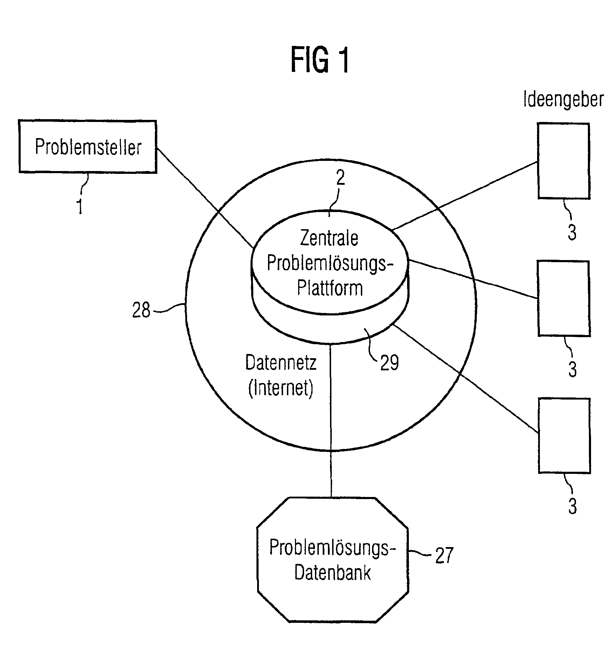

Unter Bezugnahme auf Fig. 1 soll nunmehr zuerst schematisch ein System zur Ausführung der vorliegenden Erfindung erläutert werden. Über ein Datennetz, wie beispielsweise das Internet 28 können verschiedene angeschlossene Terminals 1, 3 mit einem Server 29 des Datennetzes kommunizieren. Auf dem Server 29 ist dabei ein zentrale Problemlösungs-Plattform 2 in Form einer entsprechenden Software installiert bzw. implementiert. Der Server 29, auf den die zentrale Problemlösungs-Plattform 2 implementiert bzw. installiert ist, kann mit einer Problemlösungs-Datenbank 27 kommunizieren, die auch Teil des Servers 29 selbst sein kann. In dem Ausführungsbeispiel von Fig. 1 ist indessen die Problemlösung-Datenbank 27 als separate Datenbank dargestellt, die mit einer Datenleitung bzw. dem Internet 28 mit dem Server 29 verbunden ist. Es sei angemerkt, daß die Funktion der Problemlösungs-Datenbank 27 später im Detail erläutert werden wird.

Grundsätzlich sind die verschiedenen Terminals 1, 3 gemäß der Idee des Internets 28 austauschbar, indessen sei im folgenden angenommen, daß der Benutzer des Terminals 1 ein sog. Problemsteller, und Benutzer der Terminals 3 sog. Ideengeber sind, deren Funktionen und Aktionen im folgenden näher erläutert werden.

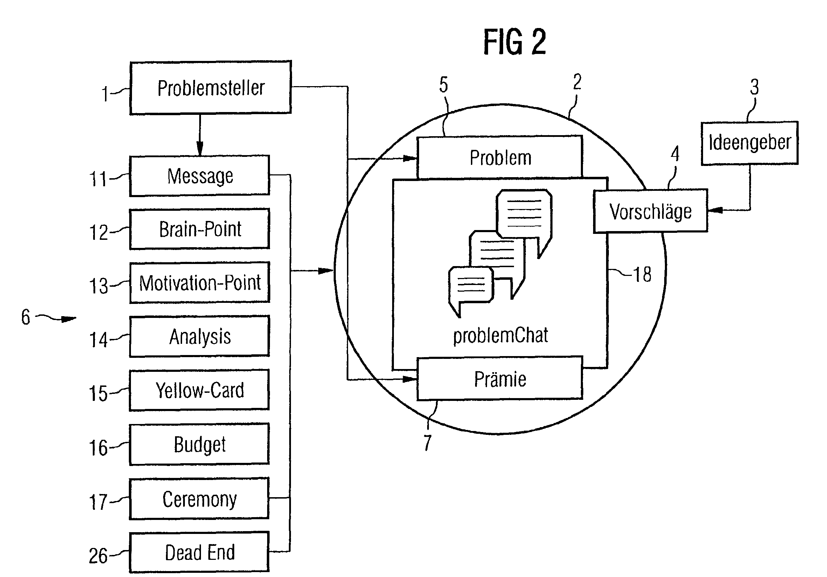

Fig. 2 zeigt eine detaillierte funktionsorientierte Darstellung des Systems von Fig. 1. Die zentrale Problemlösungs-Plattform 2 auf dem Server 29 ermöglicht es dem Problemsteller 1, d. h. genauer gesagt dem Benutzer des Terminals 1, in Text- und/oder Graphikform die Beschreibung eines Problems 5 einzugeben, das beispielsweise im Zuge eines BBS (Bulletin Board System) diskutiert werden, das an sich aus Diskussionsforen im Internet bekannt ist. Ein BBS in diesem Sinne ist eine Art schriftlicher Unterhaltung, die in Echtzeit erfolgen kann, jedoch darüber hinaus ein zeitversetztes (nachträgliches) Einfügen von Beiträgen in einzelnen strukturierten Gesprächsfäden ermöglicht. Dem Teilnehmer ist es möglich, an einen bestimmten Lösungsweg bzw. Gesprächsfaden anzuknüpfen oder aber einen gänzlich neuen Gesprächsfaden zu eröffnen.

Alternativ oder zusätzlich kann das Problem in Zuge eines sog. Termin-Chats mit weiteren Teilnehmern diskutiert werden kann. Ein "Chat" in diesem Sinne ist eine Software, die Teilnehmern dieses Dienstes eine Art schriftliche Unterhaltung durch eine (strikt) chronologische Fließtextdarstellung ermöglicht. Einen solchen Chat kann beispielsweise der Problemsteller eröffnen. Er gibt dazu in einem dazu vorgesehenen Feld einen Termin an und die übrigen Teilnehmer wissen dann, dass sie zu diesem Zeitpunkt zeitgleich mit dem Problemsteller in Person diskutieren können.

Im folgenden ist unter dem Begriff "Problemchat" ein BBS artiges System ggf. ergänzt um einen Termin-Chat zu verstehen.

Das von dem Problemsteller 1 eingegebene Problem 5 kann auf einer Oberfläche der zentralen Problemlösungs-Plattform 2 in Text und oder graphisch dargestellt werden, so daß sämtliche weiteren potentiellen Teilnehmer einer Kommunikation mit der zentralen Problemlösungs-Plattform 2 diese Problemstellung 5 auf ihrem Terminal ablesen können.

Jeder weitere Benutzer eines angeschlossenen Terminals - ggf nach einer Registrierung - kann die Funktion eines Ideengebers 3 einnehmen, was bedeutet, daß er Lösungsvorschläge 4 in die zentrale Problemlösungs-Plattform 2 eingibt. Diese Lösungsvorschläge 4 in Text- und/oder Graphikform werden ebenfalls für alle Benutzer sichtbar auf der Oberfläche der zentralen Problemlösungs-Plattform 2 dargestellt.

Wie aus Fig. 2 weiterhin ersichtlich, lobt der Problemsteller 1 vor dem Start der Problemlösung eine feste Prämie 7 aus, deren Höhe ebenfalls auf der Oberfläche der zentralen Problemlösungs-Plattform 2 angezeigt wird. Gemäß der Erfindung kommt es im Zuge der Problemlösung, ob diese nach Einschätzung bspw. des Problemstellers erfolgreich ist oder gar nicht oder bzw. nur teilweise erfolgreich ist, auf jeden Fall zu einer Übergabe der Prämie 7 an aktive Ideengeber der interaktiven Problemlösung.

Hinsichtlich des Vergabezeitpunkts und der Addressaten ist die Prämienverteilung dagegen flexibel. Die Höhe des Prämien- bzw. Geldbetrags eines Abschnitts der Vergabe ist dagegen festgelegt. Dies erleichtert den Ablauf für alle Teilnehmer.

Wesentlich ist, daß dem Problemsteller 1 zur individuellen motivierten Steuerung des Problemlösungsablaufs entsprechend der jeweiligen Vorschläge 4 der Ideengeber 3 Steuertools 6 zur Verfügung stehen. Diese Steuertools 6 ermöglichen insbesondere eine abschnittsweise individuelle Vergabe der ausgelobten Prämie 7. Als Beispiele für die Steuertools 6 sind die Tools "Message" 11 "Brain-Point" 12, "Motivation-Point" 13, "Analysis" 14, "Yellow-Card"15, "Budget" 16, "Cermony" 17 und "Dead End" 26 dargestellt.

Die Steuertools sind auf der BBS-Seite positioniert. Sie können auch während eines laufenden Termin-Chats bedient werden und erscheinen visuell als Teil der Chat-Seite. Tatsächlich ist jedoch ein das Tool-Feld der BBS-Seite als ein Zusatzframe geöffnet.

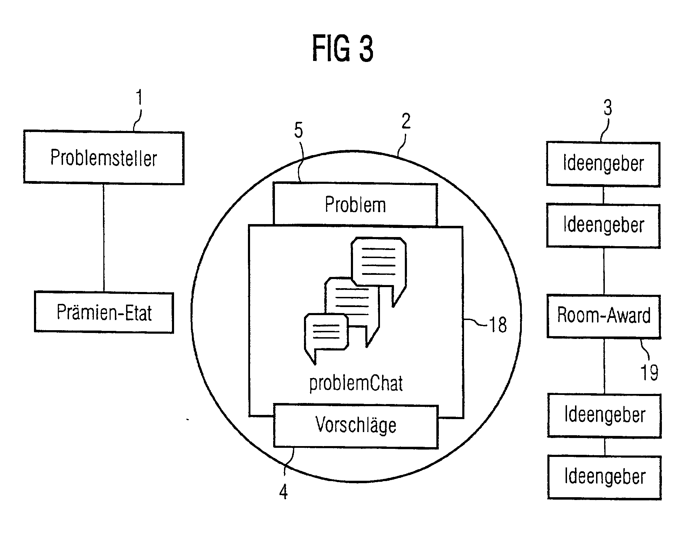

Eine weitere Art Steuertool stellt die Funktion "Room-Award" 19 dar, die in Fig. 3 dargestellt ist und die nicht auf Seiten des Problemstellers 1 sondern vielmehr auf Seiten der Ideengeber 3 benutzt wird.

Das in den schematischen Figuren 1 bis 3 dargestellte System stellt also eine ausschließlich digital verwaltete Vermittlungs-Plattform dar, auf der jeder Datennetz-Nutzer anonym Probleme lösen helfen und sich Geld-Prämien verdienen oder aber eigene Fragen auf die zentrale Problemlösungs-Plattform eingeben und lösen lassen kann.

Kernelement ist dabei eine Art fachübergreifendes Lösungs-Brainstorming in einem für die jeweilige Fragestellung eingerichteten Problem-Chat 18 und die Motivierung der potentiellen Ideengeber 3 durch Prämienpunkte bzw. Motivierungspunkte.

Die beteiligten Gruppen lassen sich also einerseits in die Problemsteller 1 als Auftraggeber sowie die Problemlöser als Ideengeber 3 einteilen.

Ein Auftraggeber kann online oder per e-mail eine Fragestellung in die zentrale Problemlösungs-Plattform 2 eingeben. Wie gesagt legt er dabei für jeden Lösungsvorschlag vorab eine Prämie 7 fest. In einem Formular werden dazu beispielsweise Kreditkartendaten zwecks Autorisierung in der Höhe des Prämienbetrages oder die Bankverbindung für den Lastschrifteinzug eingegeben. Die Prämie ist in jedem Fall unabhängig von der Qualität der Lösungsvorschläge fällig. Für jedes Problem wird ein eigener Problem-Chat 18, d.h. ein BBS und optional ein Termin-Chat, eingerichtet.

Die an Prämien interessierten Lösungsteilnehmer (auch Ideengeber) 3 können auf der Startseite der zentralen Problemlösungs-Plattform 2 einen Themenbereich auswählen oder aber ihr Interessengebiet mittels einer Suchmaschine eingeben. Sie erhalten dann entsprechend eine Auswahl von Problembeschreibungen, die bereits eingegeben wurden, mit Kontext zu dem gewählten Thema sowie einen Verweis (links) zu jeweils eingerichteten Problem-Chat 18 (BBS-Seite und optional laufender Termin-Chat). In diesem Problem-Chat 18 bestehend aus den genannten Seiten können sich die Ideengeber 3 dann aktiv an der laufenden Dikussion beteiligen und in Echtzeit Lösungsvorschläge 4 eingeben.

Die Ausschüttung der ausgelobten Prämie 7 an teilnehmende Ideengeber 3, die geldwerte Punkte erlangten, ist garantiert. In jedem Fall kommt es zu einem Transfer der ausgelobten Prämie. Der Problemsteller 1 kann den jeweils ablaufenden Problem-Chat 18 zu dem von ihm gestellten Problem 5 beobachten und sich aktiv an der im Zuge des Problem-Chats 18 ablaufenden Problemlösung beteiligen, wobei dies anonym über ein Paßword oder auch offen als Auftraggeber erfolgen kann. Dem Problemsteller 1 sind zur Steuerung des Problemlösungsablaufs im Problem-Chat 18 die Steuertools 6 als Werkzeuge an die Hand gegeben. Im folgenden soll die Funktion der einzelnen Tools 6 erläutert werden:

### Tool "Message" 11:

Das Tool "Message" 11 erlaubt die Formulierung von sog. Motto-Zeilen. Somit kann der Problemsteller 1 ein Motto eingeben, das laufend geändert werden kann und auch die Eingabe von Anweisungen für Ideengeber 3 ermöglicht. Insofern handelt es sich nicht um ein Steuertool im eigentlichen Sinne, sondern um ein Online-Texteingabefeld, das dem Problemsteller zur Verfügung steht. Falls der Problemsteller 1 die Funktionalität dieses Tools "Rules" 11 nicht ausnutzt, werden die beiden Motto-Zeilen formuliert belegt, wie beispielsweise durch
"keine Idee ist eine schlechte Idee" oder
" keine negative Kritik erlaubt".

### Tool "Brain-Point" 12:

Das Tool "Brain-Point" 12 erlaubt die Vergabe eines vorbestimmten Anteils, wie beispielsweise 5% des Betrags der vorab ausgelobten Prämie 7 pro vergebenen "Brain-Point", um offensichtlich kompetente Ideengeber 3 zu motivieren. Dadurch, daß erfindungsgemäß bereits vor der abschließenden Lösung im Zuge der zeitlichen Entwicklung der Problemlösung im Problem-Chat 18 bestimmte Anteile der Prämie 7 gemäß der vergebenen Brain-Punkte an Ideengeber 3 vergeben werden, werden diese umso stärker motiviert, Ideen gemeinsam zu entwickeln. Im Gegensatz zum Stand der Technik wird also nicht die gesamte Prämie 7 einheitlich an einen Ideengeber 3 vergeben, sondern vielmehr abschnittsweise Anteile der vorab ausgelobten Prämie 7 zu iterativen Motivierung zur Leitung der Problemlösung in dem Problem-Chat 18.

### Tool "Motivation-Point" 13:

Ohne unmittelbare Inanspruchnahme der Prämie 7 können die Teilnehmer auch mittels Vergabe von "Motivation-Point" motiviert werden. Die Vergabe eines "Motivation-Point" hat noch nicht automatisch die Vergabe eines bestimmten Betrags der Geldprämie 7 an einen Ideengeber 3 zur Folge, vielmehr muß ein Ideengeber 3 erst sukzessive eine vorbestimmte Anzahl, beispielsweise 3 "Motivation-Point" 13 ansammeln, die dann automatisch in einen "Brain-Point" mit dem entsprechenden Teilbetrag der Prämie 7 umgewandelt werden. Wird einem Ideengeber 3 ein "Brain-Point" 12 zugeteilt, bevor dieser die vorbestimmte Anzahl an "Motivation-Point" 13 erreicht hat, werden sämtliche Motivation-Points auf dem Teilnehmerkonto des entsprechenden Ideengebers 3 gelöscht. Das Tool "Motivation-Point" 13 ermöglicht somit eine flexible Steuerung der Problemlösung in dem Problem-Chat 18, ohne daß eine unübersichtliche Wertvariierung der Brain-Points angeboten werden muß.

### Tool "Analysis" 14:

Eine Aktivierung und ein anschließendes Klicken auf einen vorbestimmten Lösungsvorschlag 4, der von einem Ideengeber 3 geliefert wurde, in dem ablaufenden fließenden Text des Problem-Chats 18 kennzeichnet den Lösungsansatz und fordert somit alle Ideengeber 3 auf, die weitere Problemlösung zumindest zeitweise, d.h. bis zur Aufhebung dieser Funktion, auf die Weiterentwicklung des ausgewählten Vorschlags zu konzentrieren. In diesem Fall ergeht auch ein entsprechender Hinweis in der Nachrichtenzeile der Funktion "Message" 11 und es wird ein entsprechender Motivations-Punkt an den Ideengeber 3 des ausgewählten Vorschlags 4 vergeben.

### Tool ""Dead End" 26:

Wenn ein Lösungsvorschlag 4 in dem fließenden Text des Problem-Chats 18 durch die Funktion "Dead End" 26 markiert wird, bedeutet dies, daß der Problemsteller 1 jegliche weitere Entwicklung der Problemlösung im Sinne dieses derart gesperrten Lösungsvorschlags 4 verhindert möchte. Somit kann eine unnötige Verschwendung an Ressourcen vorgebeugt werden.

### Tool "Yellow-Card" 15:

Ideengeber 3, die beispielsweise durch destruktive Beiträge aufgefallen sind, können durch Vergabe einer "Yellow-Card" 15 sozusagen verwarnt werden, wobei eine mehrmalige Vergabe einer "Yellow-Card" an einen Ideengeber 3 im Sinne einer roten Karte die Sperrung des entsprechenden Ideengebers 3 für den vorliegenden Problem-Chat 18 zur Folge hat. Somit können gezielt störende Ideengeber 3 aus dem Problem-Chat 18 ausgeschlossen werden.

### Tool "Budget" 16:

Dieses Tool dient zur Anzeige der Restsumme der ausgelobten Prämie 7, d.h. derjenigen Summe, die nach Vergabe von Teilbeträgen gemäß den vergebenen "Brain-Points" 12 noch zur Vergabe aussteht. Ggf. kann der Prämienetat durch den Problemsteller 1 beispielsweise durch eine neuerliche Kreditkartenautorisierung zur Vergabe von weiteren "Brain-Points" 12 wieder aufgefüllt werden, falls nach dem erstmaligen Verbrauch des vorab ausgelobten Prämienetats 7 nach Auffassung des Problemstellers 1das Lösungspotential noch nicht ausgeschöpft ist. Die zwingende Vergabe der Budget-Summe ist fest einprogrammiert.

### Tool "Ceremony" 17:

Falls der Problemsteller 1 zu der Auffassung gelangt, daß ein Vorschlag 4 eines Ideengebers 3 im fließenden Text des Problem-Chats 18 eine abschließende Lösung darstellt, kann durch Betätigen des Tool "Ceremony" 17 eine sofortige Vergabe der Restprämiensumme, wie sie in dem Tool "Budget" 16 angezeigt wird, erfolgen. Der entsprechende Problem-Chat 18 zu diesem Problem 5 wird dann geschlossen. Diese Funktion sichert eine hohe Attraktiviät und Motivation noch teilnehmender Ideengeber 3 bis zum Abschluß.

Von dem Gesamtprämienetat wird ein bestimmter Anteil, bspw. 30% gesperrt und für die Ausübung der "Ceremony"-Funktion zurückbehalten. Somit steht dieser Anteil nicht für die Verteilung über die Funktion "Brain-Point" zur Verfügung.

Die Ideengeber 3 können über ein Texteingabefeld ihre Vorschläge 4 auf die entsprechende Seite des Problem-Chats 18 stellen und über ein sog. White Board durch Zeichnungen ergänzen. Die Funktion des White Boards wird im übrigen im Detail weiter unten erläutert.

Weiterhin finden die Ideengeber 3 jeweils in einer ihnen zugeordneten Tool-Leiste das SteuerTool "Room-Award" 19 (in Fig. 3). Ein bestimmter Prozentsatz der Prämiensumme 7, beispielsweise 10 % entfällt zwingend auf die Funktion "Room-Award" 19. Diese Art an Prämierung vergeben die Ideengeber 3 durch Vergabe von entsprechenden Room-Award-Punkten an den aus ihrer Sicht kreativsten Lösungsbeitrag der jeweils anderen Ideengeber 3. Jeder Ideengeber 3 hat dabei nur einen Room-Award zur Vergabe zur Verfügung, wobei jedoch dieser bis zum Abschluß des Problem-Chats 18 beliebig zu anderen Ideengebern 3 verschoben werden kann. Dies ermöglicht u.a. dem Problemsteller 1 einen Einblick auf die Bewertung der verschiedenen Lösungsvorschläge 4 aus Sicht der Ideengeber 3. Wenn ein Problemsteller 1 bis zum Abschluß des Problem-Chats 18 keine Entscheidung über die Vergabe der Prämie 7 getroffen hat, fällt die verbliebene Gesamtsumme gemäß der Funktion "Budget" 16 automatisch einschließlich des Ceremony-Anteils 17 an den Ideengeber 3, der die meisten Room-Award-Punkte 19 aufweist.

Der programmierte Verteilungsschlüssel, wie sich der Gesamtprämienetat auf Brain-Point/Motivation/Room-Award/Ceremony aufteilt, kann vom Problemsteller nicht beeinflusst werden. Dieser Verteilungsschlüssel splittet den vom Problemsteller festgelegten Gesamtbetrag in mehrere Teile, denen wie oben dargelegt jeweils ein anderer Vergabemechanismus zugrunde liegt.

Das in den Figuren 1 bis 3 dargestellte System sieht also einen motivierungspunkt- und prämiengesteuerten Problem-Chat 18 vor, der eine interaktive Problemlösung ermöglicht.

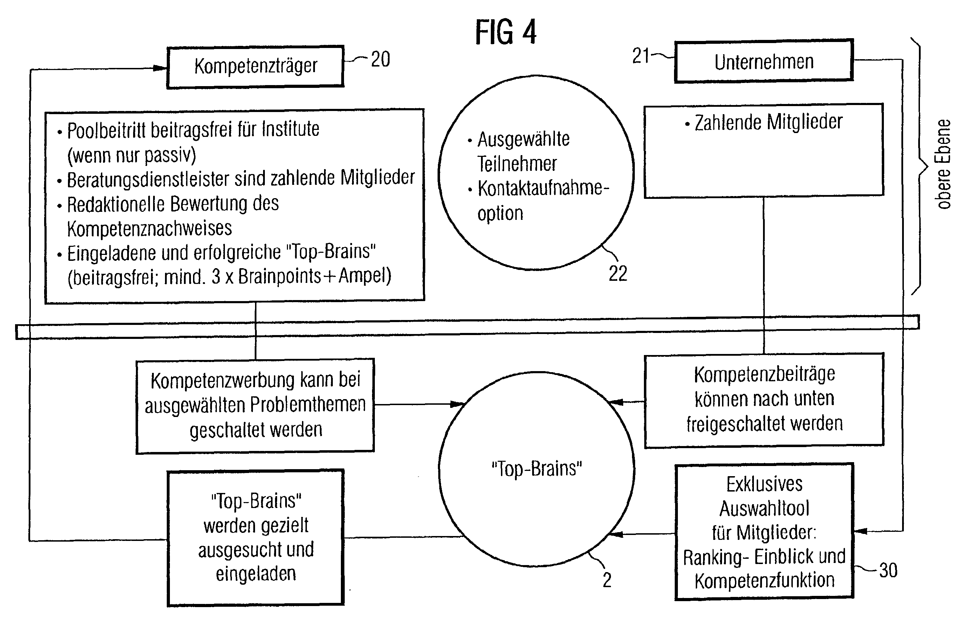

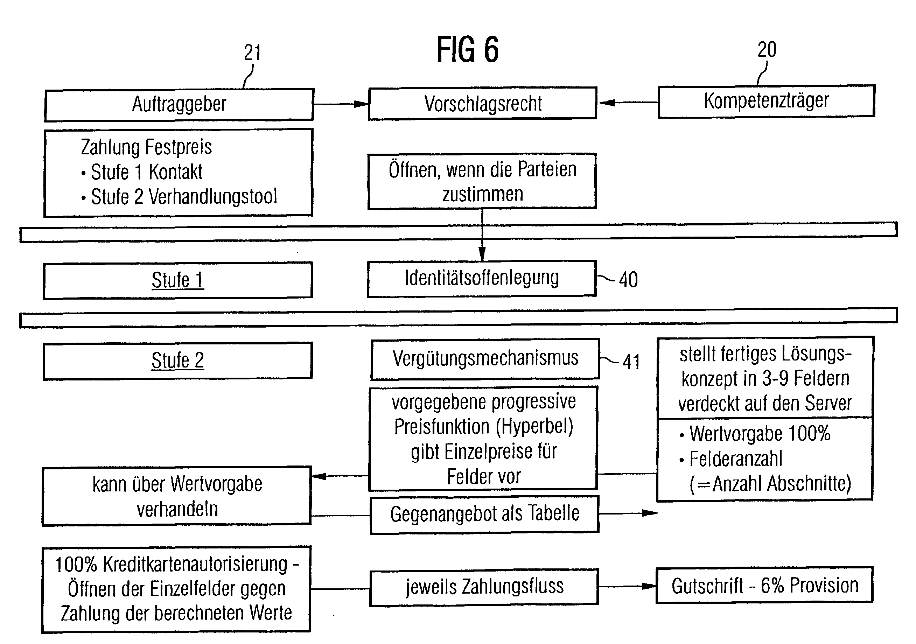

Unter Bezugnahme auf Figuren 4 bis 9 soll nunmehr ein weiteres Ausführungsbeispiel der vorliegenden Erfindung erläutert werden. Während das Ausführungsbeispiel von Figur 1 bis 3 für den öffentlichen Bereich gedacht ist, dient das Ausführungsbeispiel von Figur 4 bis 9 für den professionellen Bereich, bei dem beispielsweise Unternehmen 21 bestimmte Problemkreise lösen möchten. Die Verbindung zum Ausführungsbeispiel von Figur 1 bis 3 besteht darin, daß sich bestimmte Lösungsgeber 3 aus dem Ausführungsbeispiel von Figuren 1 bis 3 als sog. "Top-Brains" qualifizieren können, wenn sie durch ihre besondere Kompetenz beispielsweise ausgedrückt in Room-Award-Punkten auffällig geworden sind.

Attraktiv ist dieses Modell gemäß Figuren 4 bis 9 dadurch, daß die Unternehmen 21 als Auftraggeber einen priviligierten Zugriff auf die Kreativität der "Top-Brains" der unteren Ebene haben. Den Unternehmen 21 wird dazu ein exklusives Auswahl-Tool 30 zur Auswahl bewährter Ideengeber 3 zur Verfügung gestellt. Die Unternehmen 21 haben somit neben einer Kompetenz-Suchfunktion einen Einblick in ein Ranking, das sich aus dem Ablauf gemäß dem Ausführungsbeispiel von Figuren 1 bis 3 ergeben kann, und können sich anonymisierte Profile von "Top-Brains" zusammenstellen. Es kann aber auch das Kreativ-Verhalten solcher Lösungsgeber 2 bis hinein in die vollständigen Beiträge bereits abgeschlossener Problem-Chats 18 zurückverfolgt werden. Ausgewählte Ideengeber 3 können somit dann als "Top-Brains" zur Teilnahme an der Problemlösung in der höheren Ebene eingeladen werden. Das Profil bezüglich der Auswahl der "Top-Brains" aus den Lösungsgebern kann beispielsweise die folgenden Angaben enthalten:
Ranking-Position
Brain-Points und Motivations-Points nach Anzahl Gesamtwert und Verhältnis zur Teilnahmehäufigkeit
Brain-Points aufgeschlüsselt nach Thema der Problemstellung
Angaben über Anteil an Lösungen seitens Institutionen und Unternehmen gestellten Problemen etc.

Das in Fig. 4 dargestellte Verfahren kann somit auch genutzt werden, um Top-Brains dauerhaft in einen Kompetenzträgerpool 20 der oberen Ebene zu integrieren.

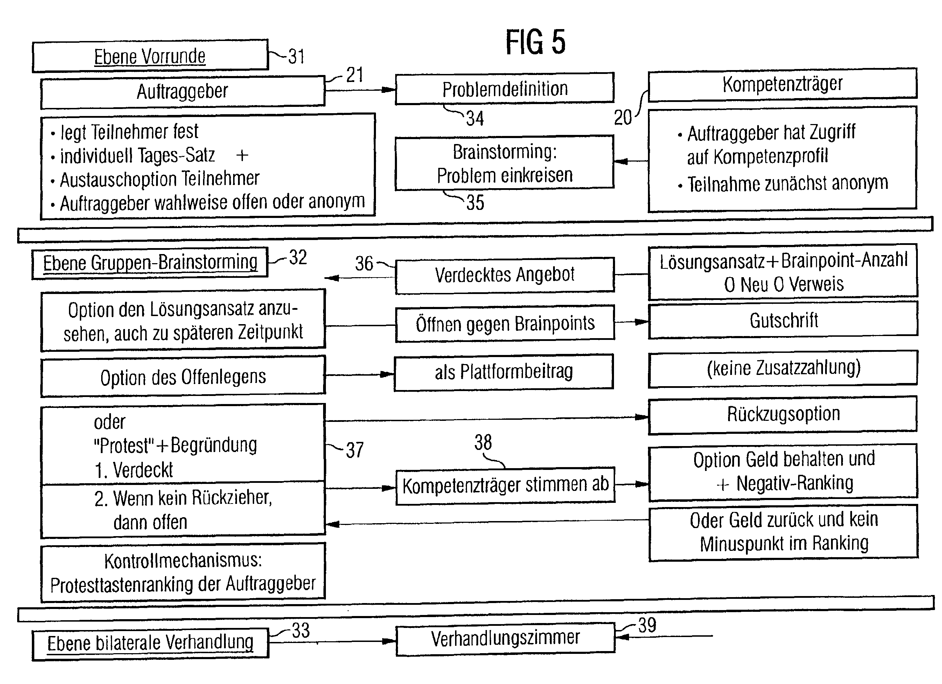

Bezugnehmend auf Fig. 5 wird nunmehr der Ablauf der Problemlösung gemäß diesem Ausführungsbeispiel erläutert. In einer Vorrunde wählt der Auftraggeber (Unternehmen) 21 die Teilnehmer nach einem anonymen Kompetenzprofil aus und handelt mit ihnen einen individuellen Tagessatz als Grundvergütung aus bzw. stimmt er dem im persönlichen Profil vorgegebenen Tagessatz zu. Der Auftraggeber 21 hat die Option, Teilnehmer der Kompetenzträger 20 jederzeit auszutauschen bzw. ihre Teilnehmerzahl zu variieren. Der Auftraggeber 21 kann dabei wahlweise offen oder anonym auftreten. Darüber hinaus definiert der Auftraggeber 21 das Problem 34. In dieser prämienfreien Vorrunde 31 wird in einem ersten Brainstorming 35 das Problem exakter definiert. Gleichzeitig haben die Kompetenzträger 20 hier die Möglichkeit, dem Auftraggeber 21 ihre Eignungsbereiche zu vermitteln, um so Vertrauen in die Werthaltigkeit ihrer in den nächsten Verhandlungsebenen 32 und 33 folgenden Lösungsansätze aufzubauen.

Als nächster Schritt erfolgt dann die ebene Gruppen-Brainstorming 32. Der Auftraggeber 21 kann die prämienfreie Vorrunde 31 beenden und dann die nächste Gruppen-Brainstorming-Ebene 32 eröffnen. Dabei stehen ihm die SteuerTools 6 gemäß dem Ausführungsbeispiel von Figuren 1 bis 3 zur Verfügung. Darüber hinaus ist der Ablauf im Sinne eines professionellen Brainstormings um spezifische Kommunikationsstrukturen erweitert:

Die Kompetenzträger 20 formulieren als Ideengeber einen Lösungsansatz, stellen ihn verdeckt auf die Plattform und legen die Brain-Point-Anzahl fest, welche der Auftraggeber 21 für den Öffnungsvorgang zu leisten hat. Gleichzeitig markieren sie offen in einer vorgegebenen Schaltfläche, ob es sich ihrer Ansicht nach um etwas Neues oder aber einen Verweis auf ein bestehendes know-how handelt. Der Auftraggeber 21 kann das verdeckte Angebot 36 zu einem beliebigen Zeitpunkt öffnen, wobei im Zuge der Öffnung eine automatische Gutschrift auf das Konto des entsprechenden Kompetenzträgers 20 erfolgt. Weiterhin kann der Auftraggeber 21 den Plattformbeitrag optional offenlegen, ohne daß dafür eine weitere Vergütung für den Kompetenzträger 20 fällig wird. Der Auftraggeber 21 kann aber auch die Protestfunktion 37 betätigen. Es wird dann ein kurzes Eingabefeld geöffnet, in welches der Protest durch den Auftraggeber 21 zu begründen ist. Dies hat die Wirkung, daß der Protest den Kompetenzträger 20 als Ideengeber zur Kenntnis gelangt und dieser sein entsprechendes Angebot 36 zurückziehen kann. Wenn der Kompetenzträger 20 sein verdecktes Angebot 36 nicht zurückzieht, wird der Protest 37 den anderen Kompetenzträgern 20 offengelegt und diese werden zur Abstimmung 38 aufgefordert. Wird dem Protest mit 2/3 Mehrheit zugestimmt, kann der entsprechende Kompetenzträger 20 die Gutschrift behalten, erhält aber einen Negativpunkt im anonymen Profil. Alternativ kann er auf die Gutschrift verzichten und erhält keinen Negativpunkt.

Zu einem beliebigen Zeitpunkt kann der Auftraggeber 21 die Ebene der bilateralen Verhandlung 33 in einem "Verhandlungszimmer" 39 eröffnen. Auf dieser bilateralen Verhandlungsebene 33 in dem Verhandlungszimmer 39 entsteht eine bilaterale Kommunikation zwischen einem ausgewählten Kompetenzträger 20, der sich in der Gruppen-Brainstorming-Ebene 32 qualifiziert hat, mit dem Auftraggeber 21. Diese bilaterale Verhandlungsebene beinhaltet auf der ersten Stufe die Identitätsoffenlegung 40 der beteiligten Parteien Auftraggeber 21 bzw. Kompetenzträger 20. Dies ist für den Auftraggeber 21 eine Bewertungshilfe im Falle hochwertiger Lösungen und einer entsprechenden Vergütung. Ziel der zweiten Stufe ist es, einen für beiden Seiten vertretbaren bilateralen Vergütungsmechanismus 41 zu finden. Der Ideengeber ausgewählt aus den Kompetenzträgern 20 teilt dabei ein fertiges Lösungskonzept in mehrere Felder beispielsweise drei bis neun Felder auf und stellt sie verdeckt auf den Server 28. Weiterhin legt er eine Wertvorgabe für 100% der Lösung fest. Schließlich gibt er eine in der Datenbank vorgegebene progressive Preisfunktion (beispielsweise Hyperbel) für die Einzelpreise der Felder vor. Der Auftraggeber 21 kann über die Wertvorgabe verhandeln, sein Gegenangebot wird wiederum als Tabelle gemäß der Preisfunktion angezeigt. Mit der Einigung wird der Problemsteller automatisch zu 100% Kreditkartenautorisierung aufgefordert. Die Einzelfelder können durch den Problemsteller gegen Zahlung der berichteten Werte geöffnet werden. Es erfolgt jeweils eine Gutschrift auf dem Ideengeberkonto.

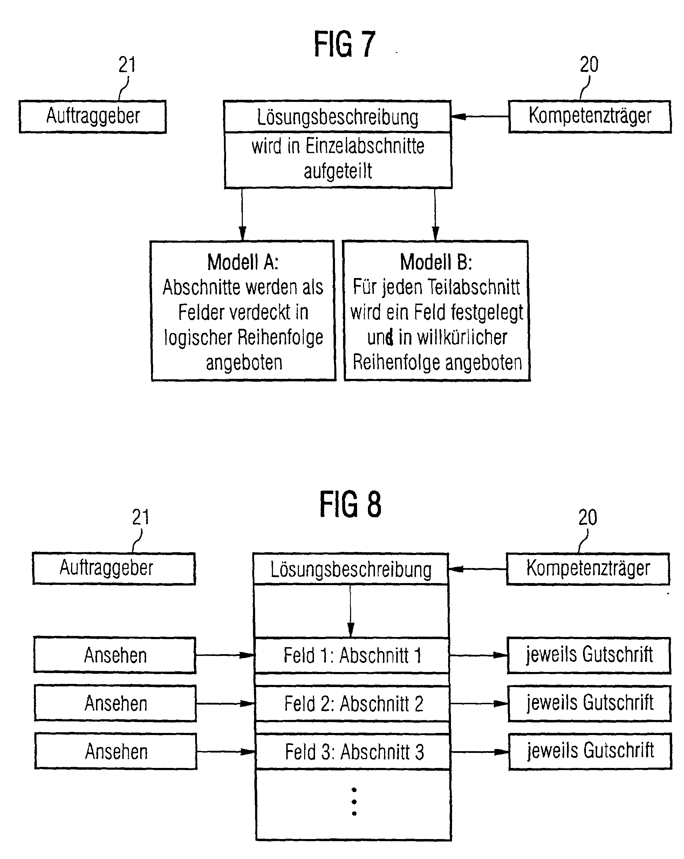

Mit Bezug auf die Figuren 7 bis 9 werden nunmehr verschiedene Modelle für die Lösungsbeschreibung und die Aufdeckung in Einzelabschnitten gezeigt. Beim Modell A gemäß Figur 8 erfolgt der Transfer in logisch gegliederten Abschnitten, wobei die Abschnitte als Felder verdeckt in logischer Reihenfolge angeboten werden. Das Feld 1 ist dabei das preiswerteste Feld, das letzte Feld enthält indessen den Schlüssel zur Lösung und ist das teuerste Feld.

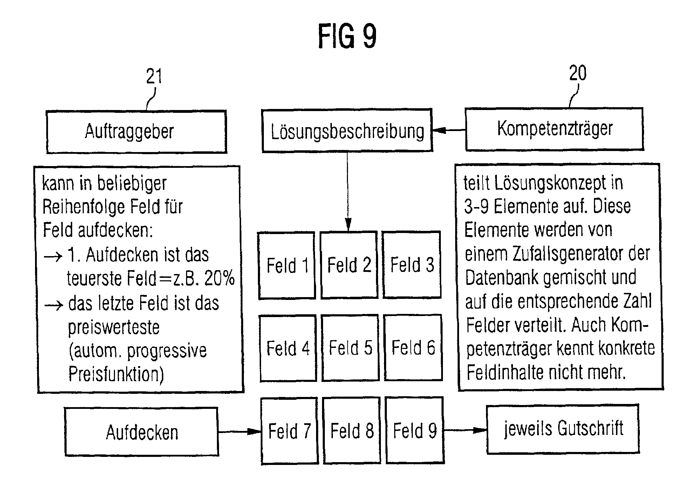

Das Modell B gemäß Fig. 9 stellt einen Verkauf der Felder der Lösungsbeschreibung mit willkürlich gemischten Elementen dar. Der Ideengeber 21 teilt das Lösungskonzept in mehrere Elemente auf. Diese Elemente werden von einem Zufallsgenerator der Datenbank gemischt und auf die entsprechende Zahl der Felder verteilt. Auch der Ideengeber kennt nunmehr die konkreten Feldinhalte nicht. Der Auftraggeber kann in beliebiger Reihenfolge Feld für Feld aufdecken, wobei das erste Aufdecken das teuerste Feld und das letzte Feld das preiswerteste ist.

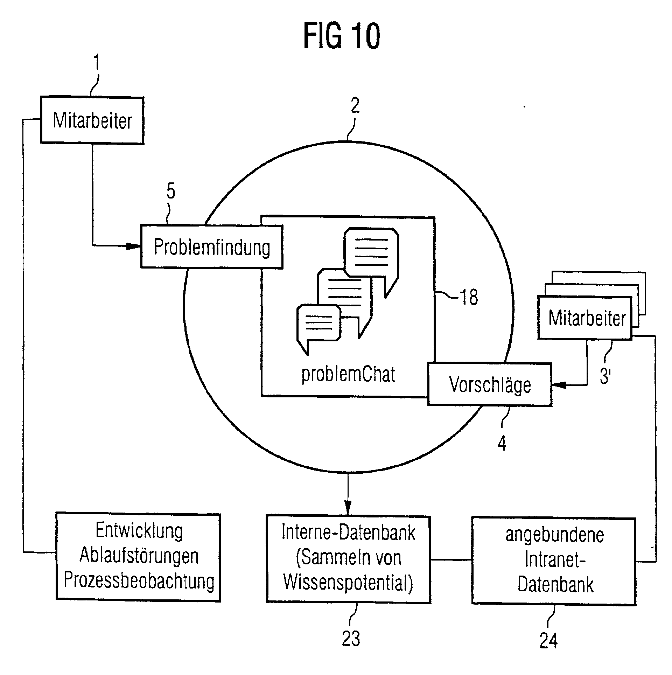

Unter Bezugnahme auf die Figuren 10 bis 12 soll nunmehr ein weiters Ausführungsbeispiel der vorliegenden Erfindung erläutert werden, das sich als firmeninternes elektronisches Brainstorming zusammenfassen lässt. Der Einsatzbereich dieses Ausführungsbeispiels ist beispielsweise die Effektivierung von kontinuierlichen Verbesserungsprozessen (KVP) und des betrieblichen Vorschlagswesens (BVW). Dieses Ausführungsbeispiel kann daher insbesondere als Kreativitäts-Tool für den Bereich Forschung und Entwicklung, Innovation und Entwicklung im Sinne einer Intranet-Anwendung eines Unternehmens dienen. Es kann Wissensressourcen von Mitarbeitern und internen Datenbeständen aktivieren. Diese Ressourcen können dann durch ein folgendes Brainstorming im Sinne eines Problem-Chats 18 noch verbessert werden. Wichtig ist dabei eine interdisziplinäre Bündelung und Einbindung von Mitarbeiterkompetenzen für Einzelaufgaben. Gleichzeitig kann das erarbeitete Wissen als Wissenspotential für die Zukunft standardisiert ist in einer Datenbank 23 abgelegt werden.

Wie in Figur 10 ersichtlich, kann ein Mitarbeiter 1 eines Unternehmens, der durch Entwicklung, Ablaufstörungen oder Prozeßbeobachtung auf ein Problem in dem Unternehmen gestoßen ist, diese Problemfindung 5 in die zentrale Problemlösungs-Plattform 2 stellen. Gleichzeitig können weitere Mitarbeiter 3' desselben Unternehmens Vorschläge 4 mittels des Problem-Chats 18, der zu dieser Problemfindung 5 geöffnet wurde, auf der zentralen Problemlösungs-Plattform 2 eingeben. Dabei kann beispielsweise eine Intranet-Datenbank 24, die angebunden ist und bereits in dem Unternehmen vorhandenes Wissen enthält, durch die Mitarbeiter 3' ausgenutzt werden. Gleichzeitig werden die neuen Vorschläge 4 standardisiert in eine Internetdatenbank 23 zum Sammeln von Wissenspotential abgelegt.

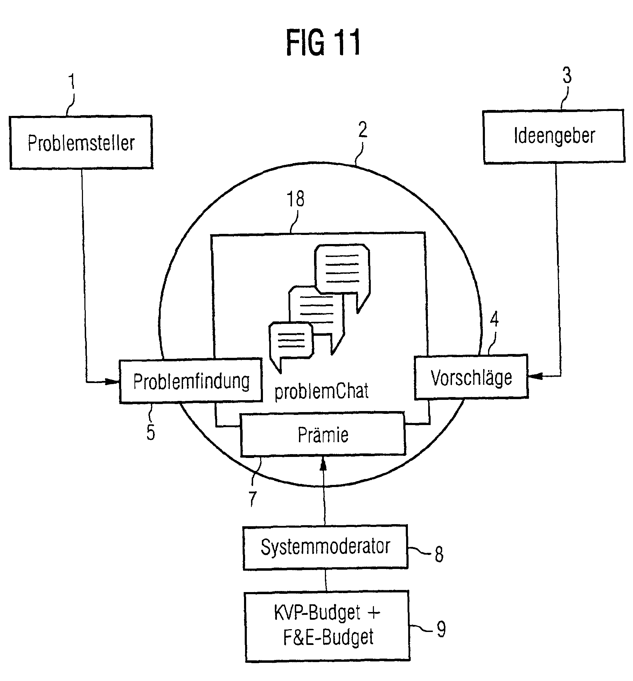

Wie aus Figur 11 ersichtlich basiert dieses System auf einem Anreizsystem, d.h. es können Prämien 7 für Problemerkennung und Lösungsvorschläge vergeben werden, wobei auch für reine Verbesserungsvorschläge Prämien vergeben werden können. Die Moderation erfolgt dabei durch einen von dem Unternehmen bestimmten Systemmoderator 8, der über ein KVB-Budget und Forschungs- und Entwicklungs-Budget 9 verfügt. Der Systemmoderator 8 eröffnet für eine bestimmte Problemfindung 5 einen Problem-Chat 18 und legt gleichzeitig die Höhe der Prämie 7 fest.

Auch für dieses Ausführungsbeispiel gemäß Figuren 10 bis 12 stehen verschiedene Steuertools zur Verfügung.

Neu ist dabei, das Tool zur Wahl 40 eines sog. Brainmasters 10. Dieses wie auch weitere Steuertools stehen zunächst nur dem Systemmoderator 8 zur Verfügung. Dieser kann die Brainmaster-Funktion 10 selbst wahrnehmen, einen Brainmaster 10 festlegen oder aber das Steuertool "Brainmaster-Wahl" 40 aktivieren.

Gemäß dem Tool "Brainmaster-Wahl 40" vergeben die Teilnehmer (Problemsteller 1, Ideengeber 3 bzw. Systemmoderator 8) Brainmasterpunkte an den Teilnehmer der ihrer Meinung nach größten Bewertungskompetenz. Nach erfolgter Wahl eines Brainmasters 10 gehen dann die Steuertools 6 auch auf den Brainmaster 10 über. Dem Systemmoderator 8 steht indessen ein Vetorecht zur Verfügung.

Das Steuertool "Budget" 41 steht exklusiv dem Systemmoderator 8 als verantwortlichen Manager des Unternehmens zur Verfügung und dient zur Budget-Erhöhung.

Im Gegensatz zu dem Ausführungsbeispiel zu den Figuren 1 bis 3 stehen also bei diesen vorliegendem Ausführungsbeispiel die Steuertools 6 zuerst dem Systemmoderator 8 zur Verfügung, bevor sie auf den Brainmaster 10 nach dessen Wahl übergehen. In der Regel werden somit die Steuertools 6 nicht in der Verfügungsgewalt des Problemstellers 1 liegen.

Die Problembeschreibung sowie auch die Beschreibung der Lösungsvorschläge kann online auf einem sog. "White Board" graphisch oder mittels e-mail übertragener Fotos etc. ergänzt werden. Alternativ kann der Benutzer auf der eigenen Festplatte gespeicherte Dateien auswählen, die dann in das "White Board" aauf der zentralen Plattform übertragen werden. Diese können zusammen mit dem Beschreibungstext der Problemstellung bzw. der Lösungsvorschläge automatisch in ein Bild niedriger Auflösung formatiert, auf dem zentralen Rechner/Server gespeichert und automatisch in dem Text des Lösungsvorschlags ein Verweis (Link) zur Ansicht der mit dem "White Board" erstellten Graphik generiert werden.

Das vektorbasierte White Board erfordert dabei als interaktive Online-Möglichkeit weder das aktive Herunterladen seitens der Teilnehmern, noch wird es softwaregesteuert unmittelbar auf dem Benutzerrechner ausgeführt, sondern wird auf dem Server selbst ausgeführt. Als serverbasiertes System ist es für alle Teilnehmer erreichbar und kann mit einer höheren Geschwindigkeit ausgeführt werden.

Die graphische Darstellung der Problembeschreibung kann idealerweise von sämtlichen weiteren Teilnehmern online eingesehen werden. Als einfachere Lösung kann vorgesehen werden, dass der Teilnehmer mit der zuletzt aktualisierten Fassung der graphischen Darstellung arbeitet, die erst auf Betätigung einer bestimmten Schaltfläche hin zu der zentralen Plattform hin übertragen wird.

Die erfindungsgemäße Technik kann auch zum Aufbau einer Problemlösungsdatenbank 27 verwendet werden. Kreative Eingaben an Problem- und Lösungsbeschreibungen sowie unaufgefordert eingegebenen Ideen werden in dieser Datenbank 27 gespeichert. Dabei werden die Problem- und Lösungsbeschreibungs-Beiträge durch einen Qualitätsfilter durch Bewertung durch die Besucher ergänzt: Jeder Besucher kann die betrachteten Problem- und Lösungsbeschreibungsvorschläge bewerten, wobei der Bewertungsdurchschnitt dann neben der Beitragsinhaltsangabe angezeigt wird. Darüber hinaus kann eine Qualitätsbewertung auf Grundlage der für die entsprechenden Lösungsvorschläge vergebenen Motivationspunkte unter Prämien erfolgen.

Die Besucherbewertung wird in digitaler Form eingegeben und beinflusst unmittelbar die Einordnung der Idee in den Rang der Ideen, die den nachfolgenden Besuchern nach der Stichworteingabe angeboten werden. Dieser digitale Qualitätsfilter kann bei einer unterdurchschnittlichen Bewertung zu einem automatischen Ausschluß des Beitrags aus dem den Besuchern zugänglichen Bereich der Datenbank führen. Der Besuch der Datenbank kann kostenpflichtig sein. Ein Teil der Kostenpauschale wird dann auf diejenigen Ideengeber umgelegt, deren Eingaben durch den zahlenden Besucher angesehen wurden. Die unaufgeforderte Eingabe von Ideen, d.h. die Einabe, welche nicht durch das Datenbank-Programm automatisch aus der zentralen Problemlösungs-Plattform übernommen werden, kann mit einer zwingenden Zahlung verbunden werden. Dieser festgelegte zwingende Betrag wird erstattet bzw. gutgeschrieben, sobald der Beitrag einen bestimmten Ranking-Status erlangt hat. Dies hat die Wirkung eines vorgelagerten Qualitätsfilters.

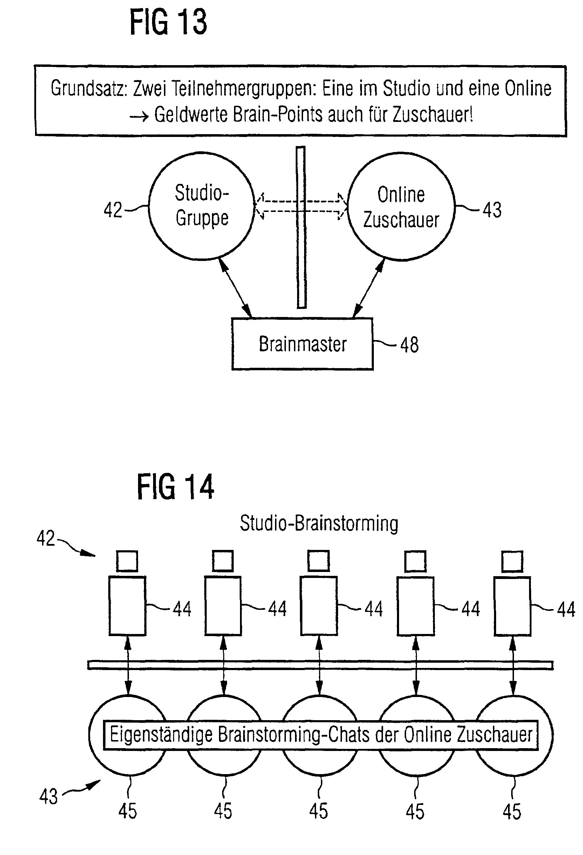

Das Konzept der vorliegenden Erfindung eignet sich ebenfalls zur Anwendung auf ein TV-Format, das interaktiv ein Datennetz (Internet) mit TV-Sendungen verknüpft. Genauer gesagt soll also dieses TV-Format durch interaktive Verknüpfung von Fernsehen und Internet eine Problemlösung darstellen. Wie aus Figur 13 ersichtlich, gibt es grundsätzlich zwei Teilnehmergruppen, nämlich eine im Fernsehstudio befindliche Studiogruppe 42 sowie die Zuschauergruppe 43, die online mit der Studiogruppe 42 kommunizieren kann. Weiterhin ist ein Brainmaster 48 (Moderator) vorgesehen, der durch Steuertools den Problemlösungsablauf beeinflussen kann. Wichtig ist dabei, daß durch Vergabe entsprechender Brain-Points an Mitglieder der Zuschauergruppe 43 geldwerte Prämien auch an die Zuschauer verteilt werden können.

Bei einem solchen Konzept kann das Problem auftreten, daß der Online-Chat durch die Online-Anbindung der Zuschauergruppe 43 mit der Studiogruppe 42 bei entsprechender Popularität der Sendung zu technischen Problemen führen kann, wenn zu viele Teilnehmer der Zuschauergruppe 43 betreut werden müßten. Andererseits soll die Zahl der potentiellen Teilnehmer der Zuschauergruppe 43 nicht künstlich begrenzt werden, da somit diesem Sendeformat der Reiz genommen werden könnte.

Figur 14 zeigt eine Möglichkeit, wie mit diesem technischen Problem umgegangen werden kann. Gemäß dem Konzept von Figur 14 wird jedem Mitglied 44 der Studiogruppe 42 ein eigener "Chatraum" 45 zugewiesen. Die Zuschauergruppe 43 wird somit in die verschiedenen Chaträume 45 unterteilt, deren Anzahl sich nach der Anzahl der Mitglieder der Studiogruppe 42 richtet. Somit können die Zuschauerbeiträge aus den Reihen der Zuschauergruppe 43 "kanalisiert" werden. Jeder Studioteilnehmer 44 der Studiogruppe 42 hat wie gezeigt einen eigenen Chatraum 45, für den ihn der Sender ein bestimmtes Prämienbudget zur Verfügung stellt. Vorschläge aus der jeweils ihm zugewiesenen Chatgruppe 45 darf der zugeordnete Teilnehmer 44 im Studio als eigene Vorschläge plazieren. Somit kommt es zu einer interessanten Identifikation zwischen Mitgliedern der Zuschauergruppe 43 und ihrem "Favoriten" der Studiogruppe 42. Wenn nämlich derjenige Teilnehmer der Studiogruppe 42 durch Erringung einer entsprechenden Anzahl von Brain-Points "gewinnt", kann im gleichen Maße eine Budgeterhöhung durch den Sender für eine gleichwertige Prämienvergabe auf Seiten des tatsächlichen Ideengebers, nämlich des entsprechenden Teilnehmers des Chatraums 45, der diesem Teilnehmer der Studiogruppe 42 zugeordnet ist, erfolgen.

Selbstverständlich dürfen Mitglieder der Zuschauergruppe 43 frei zwischen den verschiedenen Chaträumen 45 springen. Somit stellt letztendlich jede Einheit Studioteilnehmer 44/Chatraum 45 für sich selbst ein System dar, wie es beispielsweise in Figuren 1 bis 3 dargestellt ist. Letztendlich wird das System gemäß Figuren 1 bis 3 auf die Fernsehformat-Ebene umgesetzt.

In einer Abwandlung ist es möglich, dass die Mitglieder der Studiogruppe für den von ihnen betreuten Chatraum kein Prämienbudget erhalten. Ein Budget einschließlich zugehörigem Steuertool steht nur dem Brainmaster bzw. Studiomoderator zur Verfügung. Mitglieder der Studiogruppe verteilen systemgemäß Brain-points an die Online-Chatteilnehmer. Diese Brainpoints bedeuten eine verbindliche Anwartschaft für den Fall, daß das den Chat betreuende Mitglied der Studiogruppe seinerseits vom TV-Moderator einen geldwerten Brainpoint erhält. Die gleiche Summe wird automatisch - ohne Einflußnahme des TV-Moderators - auch als (rückwirkend verfügbare) Budgetsumme für den betreuten Chatraum zur Verfügung gestellt, die sich mit jedem weiteren Brainpoint, etc. entsprechend erhöht. Der Etat des TV-Moderators wird demnach in zwei gleiche Teile geteilt: 100 % Vergabe an die Studiogruppe bedeuten Vergabe von 200 % Budget. Der Sinn dieses Vergabemechanismus ist es, daß die Brainpoints, etc. des Online-Chatteilnehmers nur dann in Geld umgewandelt werden können, wenn auch das von ihnen unterstützte Studiomitglied im Studio Brainpoints, etc. erlangt. Die Folge ist eine stärkere Identifikation der Online-Chatteilnehmer mit ihrem "Favoriten" im TV-Studio und somit eine gewisse Gewähr dafür, daß die Chatteilnehmer sich tatsächlich bis zum Ende der Sendung beteiligen, um ihren Favoriten aktiv zu unterstützen.

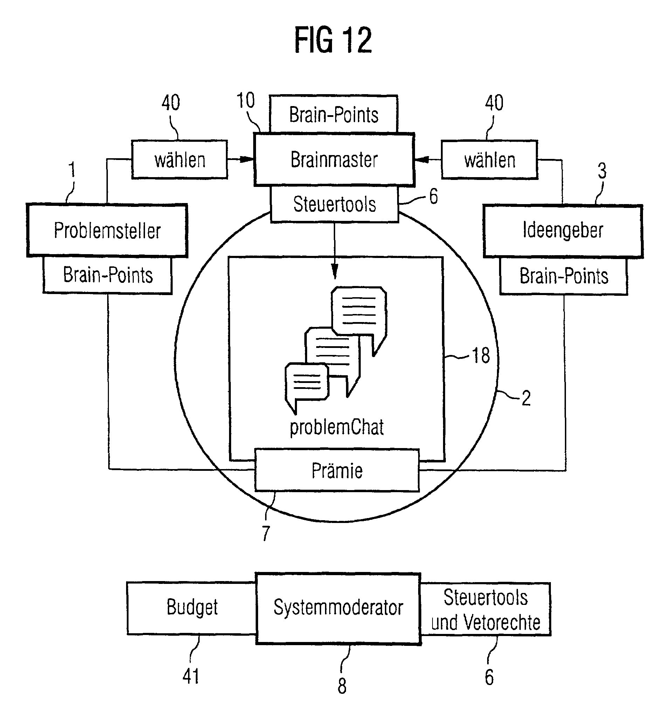

Im folgenden soll die Funktion des Brainmasters 48 vorgestellt werden:
Die Funktion dieses Brainmasters 48 ist in etwa mit der Funktion des Systemmoderators 8 gemäß Figur 12 vergleichbar. Im Fernsehstudio ist also dann der Sendemoderator gleichzeitig Brainmaster 48 und setzt gegenüber den Teilnehmern der Studiogruppe 42 die Steuertools 6 ein, die bereits bezugnehmend auf Figuren 1 bis 3 erläutert wurden. Die Zuschauer können ebenfalls durch Vergabe an Brain-Points motiviert werden. Somit besteht also der besondere Reiz dieses Konzepts darin, daß auch Zuschauer geldwerte Brain-Points erlangen können.

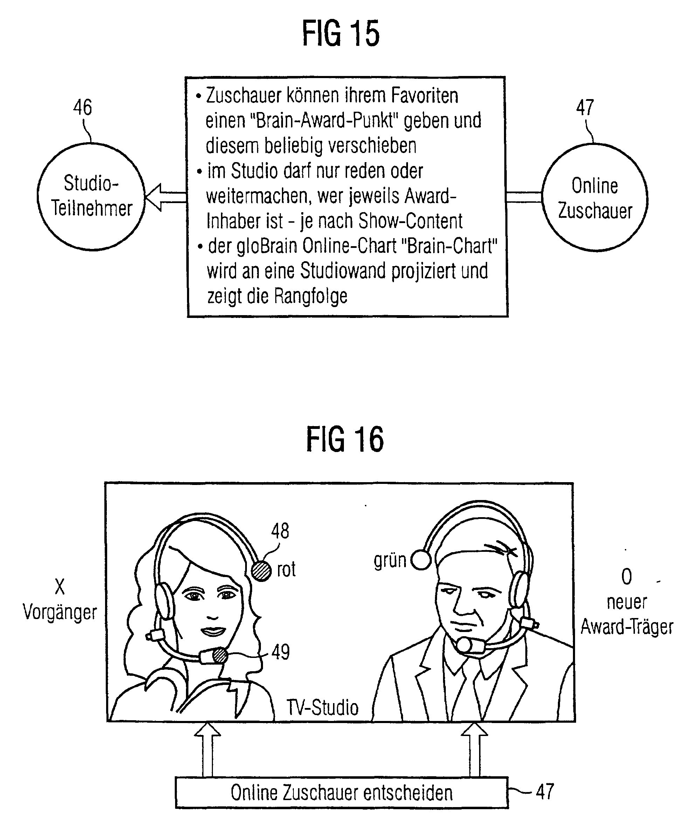

Bezugnehmend auf Figur 15 soll nunmehr eine Abwandlung des TV-Formats erläutert werden.

Gemäß diesem Konzept wird die Room-Award-Funktion, die bereits unter dem Bezugszeichen 19 unter Bezugnahme auf Figur 3 erläutert wurde, isoliert angeboten und dem Fernsehformat angepaßt. Dieses derart isolierte Tool "Room-Award" ermöglicht eine quotenorientierte Sendesteuerung durch den Zuschauer. Der Zuschauer wird durch die Isolierung des Tools nicht mehr durch eine Vielzahl an Steuertools überfordert. Somit läßt sich dieses System in bestehende Formate (Diskussionsrunden, Reality-TV-Shows, Comedys) integrieren.

Wie aus Figur 15 ersichtlich, können bei der isolierten Anwendung des Steuertools "Room-Award" Teilnehmer aus der Zuschauergruppe 47 ihrem Favoriten der StudioTeilnehmergruppe 46 einen Brain-Award-Punkt geben und diesen beliebig zwischen den verschiedenen Mitgliedern der Studioteilnehmergruppe 46 verschieben. Das Rederecht hat nur derjenige der Studioteilnehmergruppe 46, der gerade Award-Inhaber ist. Somit bekommen also nicht Mitglieder Online-Teilnehmergruppe 47 Award-Punkte, sondern Mitglieder der Studioteilnehmergruppe 46. Das Rederecht ist also an den Brain-Award-Punkt gekoppelt. Dabei können nur Mitglieder der Online-Zuschauergruppe 47, die tatsächlich online sind, Punkte vergeben, sobald ein Mitglied der Online-Zuschauergruppe 47 in den Offline-Zustand geht, entfällt sein gegebenenfalls bereits vergebener Award.

Figur 16 zeigt eine weitere Möglichkeit der Anwendung des Konzepts der vorliegenden Erfindung auf ein TV-Format. Gemäß diesem Konzept hat jeder Studiogast einen Mikrofonbügel (oder Helm) 49 auf dem Kopf, an dessen oberen Ende eine kleine Anzeigeeinheit (Glühbirne) 48 befestigt ist. Die Glühbirne des aktuellen Award-Inhabers leuchtet beispielsweise grün, was gleichzeitig die Freischaltung seines Mikrofons 49 bedeutet. Sobald ein anderer Teilnehmer durch Erwerb entsprechender Punkte die "Führung" übernimmt, ändert sich die Farbe der Anzeigeeinheit 48 beispielsweise auf Rot und das Mikrofon 49 des "roten" Teilnehmers wird gesperrt.

## Patentansprüche

1. Verfahren zur interaktiven Problemlösung über ein Datennetz (28), aufweisend die folgenden Schritte:
- Eingabe einer Problemstellung (5) in das Datennetz (28) durch einen ersten Teilnehmer (1), und
- Eingabe von Lösungsvorschlägen (4) durch weitere Teilnehmer (3),
wobei dem ersten Teilnehmer (1) Steuertools (6) zur Verfügung stehen, die eine gezielte individuelle Vergabe von Motivationspunkten bzw. Prämierung der weiteren Teilnehmer (3) ermöglichen, und die Vergabe von Motivationspunkten (13) bzw. der Prämierung (12) im Zuge der Entwicklung der Lösungsvorschläge (4) durch den ersten Teilnehmer (1) bezüglich der weiteren Teilnehmer (3) zum Lenken der Entwicklung der Problemlösung variiert werden kann.

2. Verfahren nach Anspruch 1,
**dadurch gekennzeichnet,**
**dass** der erste Teilnehmer (1) vorab eine feste Prämie (7) festlegt, die im Zuge der Problemlösung flexibel aufgeteilt wird, die summenmäßige Aufteilung aber gemäß einem bestimmten Schlüssel erfolgt.

3. Verfahren nach Anspruch 1 oder 2,
**dadurch gekennzeichnet,**
**daß** der erste Teilnehmer (1) feste Teilbeträge der Motivationspunkte bzw. Prämierung flexibel hinsichtlich des Zeitpunkts und des Adressaten vergeben kann.

4. Verfahren nach einem der vorhergehenden Ansprüche,
**dadurch gekennzeichnet,**
**dass** die weiteren Teilnehmer (3) wenigstens teilweise die Vergabe der Prämierung (19) unter sich selbst beeinflussen.

5. Verfahren nach einem der vorhergehenden Ansprüche,
**dadurch gekennzeichnet,**
**dass** die Zahl der weiteren Teilnehmer (3) unbeschränkt ist.

6. Verfahren nach einem der vorhergehenden Ansprüche,
**dadurch gekennzeichnet,**
**dass** die Eingabe der Problemstellung und der Lösungsvorschläge sowie die Bereitstellung der Steuertools (6) über eine zentrale Datennetz- Plattform (2) erfolgen.

7. Verfahren nach Anspruch 6,
**dadurch gekennzeichnet,**
**dass** die Lösungsvorschläge in Echtzeit eingegeben und auf der Datennetz-Plattform (2) angezeigt werden.

8. Verfahren nach einem der vorhergehenden Ansprüche,
**dadurch gekennzeichnet,**
**dass** die Eingabe der Problemstellung und der Lösungsvorschläge anonym erfolgt.

9. Verfahren nach einem der vorhergehenden Ansprüche,
**dadurch gekennzeichnet,**
**dass** die Steuertools (6) eine Funktion (12) zur Vergabe eines Teilbetrags der Prämie an weitere Teilnehmer (3) aufweisen.

10. Verfahren nach einem der vorhergehenden Ansprüche,
**dadurch gekennzeichnet,**
**dass** die Steuertools (6) eine Funktion (14) zur Markierung eines ausgewählten Lösungsvorschlags aufweisen, gemäß dem zumindest zeitweise die weitere Entwicklung der Problemlösung erfolgen soll.

11. Verfahren nach einem der vorhergehenden Ansprüche,
**dadurch gekennzeichnet,**
**dass** die Steuertools (6) eine Funktion (26) zur Sperrung der Weiterentwicklung eines Lösungsvorschlags aufweisen, so dass die weitere Entwicklung der Problemlösung zumindest zeitweise nicht mehr im Sinne des gesperrten Lösungsvorschlags erfolgen kann.

12. Verfahren nach einem der vorhergehenden Ansprüche,
**dadurch gekennzeichnet,**
**dass** die weiteren Teilnehmer (3) untereinander Prämierungen (19) vergeben können.

13. Verfahren zur interaktiven Problemlösung über ein Datennetz (28), aufweisend die folgenden Schritte:
- Eingabe einer Problemstellung (5) in das Datennetz (28) durch einen ersten Teilnehmer (1), und
- Eingabe von Lösungsvorschlägen (4) durch weitere Teilnehmer (3),
wobei dem ersten Teilnehmer (1) Steuertools (6) zur Verfügung stehen, die eine abschnittweise Vergabe einer festen vorab festgelegten Prämie (7) an die weiteren Teilnehmer (3) ermöglichen.

14. Verfahren zur interaktiven Problemlösung nach Anspruch 13,
daß der erste Teilnehmer (1) feste Teilbeträge der Motivationspunkte bzw. Prämierung flexibel hinsichtlich des Zeitpunkts und des Adressaten vergeben kann.

15. Softwareprogramm,
**dadurch gekennzeichnet,**
**dass** es in einem in einen Speicher eines Rechners eines Datennetzes (28) geladenen oder implementierten Zustand an das Datennetz (28) angeschlossenen Teilnehmern die Ausführung eines Verfahrens nach einem der vorhergehenden Ansprüche ermöglicht.

16. Webserver,
**dadurch gekennzeichnet,**
**dass** er ein Softwareprogramm nach Anspruch 15 aufweist.

17. Verfahren zur interaktiven Problemlösung über ein Datennetz (28), aufweisen die folgenden Schritte:
- Eingabe einer Fragen- oder Problemstellung (5) in das Datennetz (28) durch einen ersten Teilnehmer (1), und
- Eingabe von Antworten oder Lösungsvorschlägen (4) durch weitere Teilnehmer (3),
wobei einem Moderator (8, 10) Steuertools (6) zur Verfügung stehen, die eine gezielte individuelle Vergabe von Motivationspunkten bzw. Prämierung der weiteren Teilnehmer (3) ermöglichen, und die Vergabe von Motivationspunkten bzw. Prämierung im Zuge der Entwicklung der Lösungsvorschlägen bzw. Antworten (4) durch den Moderator (8, 10) bezüglich der weiteren Teilnehmer (3) zum Lenken der Entwicklung der Problemlösung variiert werden kann.

18. Verfahren nach Anspruch 17,
**dadurch gekennzeichnet,**
**daß** die weiteren Teilnehmer Online-Zuschauer einer Fernseh-Sendung sind und der Moderator ein Fernsehmoderator in einem Studio ist.

19. Verfahren nach Anspruch 18,
**dadurch gekennzeichnet,**
**daß** mehrere Zuschauer-Chats eingerichtet sind, mittels der Online-Zuschauer einem dem Chat fest zugeordneten Studiogast Lösungsvorschläge unterbreiten können.

20. Verfahren nach Anspruch 17,
**dadurch gekennzeichnet,**
**dass** der Moderator (10) durch den ersten Teilnehmer (1) und/oder die weiteren Teilnehmer (3) gewählt wird.

21. Verfahren nach einem der Ansprüche 17 bis 20,
**dadurch gekennzeichnet,**
**dass** der Moderator (8, 10) vorab eine feste Prämie (7) festlegt, die im Zuge der Problemlösung flexibel aufgeteilt wird.

22. Verfahren nach einem der Ansprüche 17 bis 21,
**dadurch gekennzeichnet,**
**dass** die Zahl der weiteren Teilnehmer (3) beschränkt ist.

23. Verfahren nach einem der Ansprüche 17 bis 22,
**dadurch gekennzeichnet,**
**dass** das Datennetz ein firmeninternes Intranet ist.

24. Verfahren nach einem der Ansprüche 17 bis 23,
**dadurch gekennzeichnet,**
**dass** die weiteren Teilnehmer anonym sind.

25. Verfahren nach einem der Ansprüche 17 bis 24,
**dadurch gekennzeichnet,**
**dass** die Eingabe der Problemstellung und der Lösungsvorschläge sowie die Bereitstellung der Steuertools über eine zentrale Datennetz- Plattform (2) erfolgen.

26. Verfahren nach Anspruch 25,
**dadurch gekennzeichnet,**
**dass** die Lösungsvorschläge in Echtzeit eingegeben und auf der Datennetz-Plattform (2) angezeigt werden.

27. Verfahren nach einem der Ansprüche 17 bis 26,
**dadurch gekennzeichnet,**
**dass** die Steuertools (6) eine Funktion zur Vergabe eines Teilbetrags an einen weiteren Teilnehmer (3) aufweisen.

28. Verfahren nach einem der Ansprüche 17 bis 26,
**dadurch gekennzeichnet,**
**dass** die Steuertools (6) eine Funktion zur Lenkung der Problemlösung entsprechend einem ausgewählten Lösungsvorschlag aufweisen.

29. Verfahren nach einem der Ansprüche 17 bis 28,
**dadurch gekennzeichnet,**
**dass** die Steuertools (6) eine Funktion zur Sperrung der Weiterentwicklung eines ausgewählten Lösungsvorschlags aufweisen.

30. Verfahren nach einem der Ansprüche 17 bis 29,
**dadurch gekennzeichnet,**
**dass** die weiteren Teilnehmer (3) untereinander Motivationspunkte oder Prämierungen vergeben können.

31. Softwareprogramm,
**dadurch gekennzeichnet,**
**dass** es in einem in einen Speicher eines Rechners eines Datennetzes geladenen oder implementierten Zustand Teilnehmern des Datennetzes die Ausführung eines Verfahrens nach einem der Ansprüche 17 bis 30 ermöglicht.

32. Webserver,
**dadurch gekennzeichnet,**
**dass** er ein Softwareprogramm nach Anspruch 30 aufweist.

33. Verwendung eines Verfahrens nach einem der Ansprüche 17 bis 30 in einem kontinuierlichen Verbesserungsprozeß eines Unternehmens.

34. Verfahren zur interaktiven Problemlösung über ein Datennetz (28),
wobei die Problemstellung durch einen Auftraggeber (21) und die Problemlösung durch Kompetenzträger (20) erfolgt und das Verfahren die folgenden Schritte aufweist:
- Öffentliche Auswahl über das Datennetz (28) eines kompetenter Kompetenzträger aus mehreren anonymen Kompetenzträgern (20) auf Grundlage von Teillösungsvorschlägen, die die Kompetenzträger über das Datennetz (28) abgeben, und
- Nichtöffentliche Lösung der Problemstellung zwischen einem identifizierten ausgewählten Kompetenzträger und dem Auftraggeber.

35. Verfahren nach Anspruch 34,
**dadurch gekennzeichnet,**
**dass** die Auswahl der Kompetenzträger über eine zentrale Datennetz-Plattform erfolgt.

36. Verfahren nach einem der Ansprüche 34 oder 35,
**dadurch gekennzeichnet,**
**dass** die Kompetenzträger (20) vorausgewählt werden.

37. Verfahren nach einem der Ansprüche 34 bis 36,
**dadurch gekennzeichnet,**
**dass** der Kreis der Auftraggeber (21) bestimmt ist.

38. Softwareprogramm,
**dadurch gekennzeichnet,**
**dass** es in einem in einen Speicher eines Rechners eines Datennetzes geladenen oder implementierten Zustand Teilnehmern des Datennetzes die Ausführung eines Verfahrens nach einem der vorhergehenden Ansprüche ermöglicht.

39. Webserver,
**dadurch gekennzeichnet,**
**dass** er ein Softwareprogramm nach Anspruch 38 aufweist.

40. Verfahren zur interaktiven Problemlösung über ein Datennetz (28), aufweisen die folgenden Schritte:
- Eingabe einer Fragen- oder Problemstellung (5) in das Datennetz (28) durch einen ersten Teilnehmer (1), und
- Eingabe von Antworten oder Lösungsvorschlägen (4) durch weitere Teilnehmer (3),
wobei die Darstellung der Problembeschreibung und der Antworten bzw. Lösungsvorschläge online und graphischen auf einer Datennetz-Plattform (2) auf einem zentralen Rechner des Datennetzes (28) erfolgt, so dass die graphische Darstellung der Problembeschreibung und der Antworten bzw. Lösungsvorschläge online von dem ersten und den weiteren Teilnehmern eingesehen werden kann.

41. Verfahren nach Anspruch 40,
**dadurch gekennzeichnet,**
**dass** die grafische Darstellung ohne Herunterlade-Vorgang auf den Teilnehmer-Rechner erfolgt.

42. Softwareprogramm,
**dadurch gekennzeichnet,**
**dass** es in einem in einen Speicher eines Rechners eines Datennetzes geladenen oder implementierten Zustand Teilnehmern des Datennetzes die Ausführung eines Verfahrens nach einem der Ansprüche 40 oder 41 ermöglicht.

43. Webserver,
**dadurch gekennzeichnet,**
**dass** er ein Softwareprogramm nach Anspruch 42 aufweist.

44. Problemlösungs-Datenbank,
**dadurch gekennzeichnet,**
**dass** die Datenbank (27) Problemstellungen und Lösungsvorschläge enthält, die nach einem der Ansprüche 1 bis 14, 17 bis 30 oder 34 bis 41 in eine zentrale Datennetz-Plattform (2) eingegeben wurden.

45. Datenbank nach Anspruch 44,
**dadurch gekennzeichnet,**
**daß** die Lösungsvorschläge in der Datenbank (27) hinsichtlich ihrer Qualität bewertet sind.

46. Datenbank nach Anspruch 45,
**dadurch gekennzeichnet,**
**daß** die Qualitätsbewertung auf Grundlage der für die entsprechenden Lösungsvorschläge vergebenen Motivationspunkte oder Prämien erfolgt.

47. Datenbank nach einem der Ansprüche 44 bis 46,
**dadurch gekennzeichnet,**
**dass** weiterhin unaufgeforderte Ideen in die Datenbank eingegeben werden können.
